**Europäisches Patentamt**

(19) **European Patent Office**

**Office européen des brevets**

(11) Numéro de publication: **0 194 165**
**B1**

(12) **FASCICULE DE BREVET EUROPÉEN**

(45) Date de publication du fascicule du brevet:
**21.09.88**

(51) Int. Cl.⁴: **C 11 C 3/04,** C 10 L 1/18

(21) Numéro de dépôt: **86400094.8**

(22) Date de dépôt: **17.01.86**

(54) Procédé de fabrication d'une composition d'esters d'acide gras utilisables comme carburant de substitution du gazole avec de l'alcool ethylique hydrate et composition d'esters ainsi formés.

(30) Priorité: **15.02.85 FR 8502340**

(43) Date de publication de la demande:
**10.09.86 Bulletin 86/37**

(45) Mention de la délivrance du brevet:
**21.09.88 Bulletin 88/38**

(84) Etats contractants désignés:
**BE CH DE GB IT LI NL SE**

(56) Documents cité:
**EP-A-0 127 104**
**US-A-4 164 506**

(73) Titulaire: **INSTITUT FRANCAIS DU PETROLE, 4, Avenue de Bois- Préau, F-92502 Rueil- Malmaison (FR)**

(72) Inventeur: **Stern, Robert, 5, Rue Nollet, F-75017 Paris (FR)**
Inventeur: **Hillion, Gérard, 10, Place du Cassan, F-95220 Herblay (FR)**
Inventeur: **Gateau, Paul, 26, rue de la Fontaine des Vaux, F-78860 Saint Nom la Breteche (FR)**
Inventeur: **Guibet, Jean- Claude, 5 bis, rue Quinault, F-78100 Saint Germain en Laye (FR)**

## Description

L'invention concerne un nouveau procédé de fabrication d'une composition d'esters d'acide gras comprenant une proportion majeure d'esters éthyliques utilisables comme carburant de substitution du gazole, les matières premières étant une huile ou une graisse d'origine végétale ou animale et un ou plusieurs alcools et de façon prépondérante l'alcool éthylique hydraté. Elle concerne aussi les compositions d'esters obtenus par ce procédé.

Ces esters sont destinés à être utilisés comme substitut du gazole et doivent présenter un certain degré de pureté, qui est généralement d'au moins 97 % en esters. Par ailleurs, après purification, il est souhaitable que le rendement en poids d'esters bruts par rapport à l'huile et sans tenir compte de l'alcool contenu dans la phase ester soit au moins égal à 95 % et de préférence compris entre 97 et 102 %.

La réaction de transestérification ou d'alcoolyse des triglycérides ou des huiles d'origine végétale ou animale en présence d'un alcool ou de catalyseurs acides ou basiques conduit avantageusement à la formation d'esters d'acides gras de l'alcool mis en jeu et de glycérol. On peut citer les brevets US-4-164 506 et EP-0 127 104.

Le brevet US-A-4 164 506 concerne en effet un procédé dans lequel on effectue en premier lieu une étape d'estérification en présence d'un excès d'un alcool à faible nombre d'atomes de carbone pour neutraliser les acides libres contenus dans des graisses et éliminer les impuretés telles que les polypeptides et les phospholipides. Le brevet EP-A-0 127 104 mentionne également une étape de préestérification avec un monoalcool, en particulier avec du méthanol à faible température et sous faible pression, avant l'étape d'alcoolyse.

Selon le brevet US-2 383 601 il est recommandé d'utiliser un alcool absolu (le méthanol) en présence d'huiles très acides.

Avec l'alcool éthylique absolu et des huiles acides (présence d'acides gras) ou inversement avec une huile neutre, et un alcool hydraté, la transestérification par catalyse acide, aboutit à un taux de conversion qui n'est pas total. Il se forme ou il subsiste des quantités d'acides gras qu'il faut neutraliser pour prévenir toute corrosion éventuelle provenant de l'ester utilisé comme carburant. La neutralisation provoque l'élimination de ces acides sous forme de sels mais surtout réduit le rendement en esters dans la mesure où ceux-ci sont entraînés par les sels de sodium ou de potassium dans une phase aqueuse de glycérol ou même dans le solide formé par les sels d'acide gras.

L'utilisation de l'éthanol comme réactif implique donc selon plusieurs publications, qu'il soit anhydre et que les huiles soient neutres (J. GRAILLE dans "Biomasse actualité" p. 35 Juin 1984). En catalyse basique où généralement la réaction de transestérification est rapide on part d'huiles neutres ou faiblement acides car les acides gras en proportion trop importante (> 0,5 %) inhiberaient la réaction en consommant le catalyseur pour former des savons. Selon FREEDMAN et al dans JAOCS 61, n° 10 p. 1638 les composants du mélange catalyseur, alcool et huile doivent être anhydres sinon le rendement en ester diminue, la réaction n'étant pas totale.

Si l'on admet d'utiliser un alcool absolu et une huile neutre les problèmes sont simplement déplacés. En effet, les exigences industrielles impliquent pour le séchage de l'alcool éthylique des installations sophistiquées comme une colonne à plateaux si le séchage se fait par entraînement azéotropique. Si le séchage de l'alcool se fait par tamis moléculaire, il faudrait par exemple, en admettant un rapport stoechiométrique de 2, une quantité de tamis de l'ordre de 150 kg/t avec un alcool à 7 % d'eau. De plus, les huiles doivent subir un raffinage alcalin ou physique qui peut être très onéreux dans une petite installation. Finalement avec l'alcool absolu, le glycérol qui se forme ne décante pas spontanément et il faut en évaporer l'excès de l'alcool ou ajouter de l'eau sans que l'on obtienne d'ailleurs une conversion totale, celle-ci étant généralement obtenue avec des quantités d'alcool très grandes. Finalement, il serait très intéressant de pouvoir utiliser de l'alcool éthylique hydraté dans la préparation des esters d'acide gras.

En effet, grâce à l'utilisation de cet alcool on peut envisager la fabrication de substitut de gazole dans un pays ou un site, où l'infrastructure industrielle est faible. Il suffit pour cela de pouvoir fabriquer un alcool à partir de produits de fermentation et de posséder une presse pour fabriquer l'huile. Un avantage de l'utilisation d'alcool hydraté est son faible coût de production.

On a trouvé de façon surprenante que non seulement on pouvait utiliser l'alcool hydraté avec succès, mais que l'utilisation de cet alcool permettrait de simplifier le procédé de fabrication de l'ester.

Le procédé est simplifié car en présence d'alcool hydraté, le glycérol décante facilement et la phase ester est d'autant plus pure et pauvre en glycérol que l'alcool contient plus d'eau.

Un objet de la présente invention est donc de fournir un procédé économique de fabrication d'un mélange d'esters de pureté et de rendement élevés pouvant servir de carburant de substitution du gazole à partir d'alcool hydraté.

Un autre objet de la présente invention est de fournir un procédé qui peut s'appliquer non seulement à l'utilisation d'huiles ou de graisses neutres ou faiblement acides, ou dégommées mais aussi d'huiles ou de graisses acides ou très acides.

L'acidité de l'huile est le pourcentage en poids de l'acide gras prépondérant dans l'huile dénommée.

Le procédé selon l'invention permet d'utiliser des huiles ou des graisses dont l'acidité peut aller jusqu'à environ 50 %.

Un autre objet de la présente invention est de fournir un procédé qui peut s'appliquer directement à la

2

fabrication d'esters à partir de graines en utilisant comme solvant d'extraction qui est en même temps un réactif, l'alcool éthylique qui au contact de la graine peut être plus ou moins hydraté. Ce procédé pourrait être appliqué sur les graines de coton.

Pour répondre à ces objectifs, on propose un procédé de fabrication d'une composition d'esters d'acides gras comprenant une proportion majeure d'esters éthyliques utilisable comme carburant de substitution de gazole, par transestérification d'une huile et/ou d'une graisse d'origine végétale ou animale pouvant contenir des acides libres; ce procédé comprend:

a) une première étape dans laquelle on effectue au moins une transestérification de ladite huile ou graisse en présence d'au moins un monoalcool consistant au moins en majeure partie en alcool éthylique, ledit alcool éthylique contenant de 1 à 60 % en poids d'eau, et d'un catalyseur acide, ladite transestérification conduisant à la formation d'une phase riche en esters et d'une phase riche en glycérol, ladite première étape étant réalisée dans des conditions telles qu'elle conduit à une conversion substantielle d'huile ou de graisse.

b) une seconde étape dans laquelle après élimination de la phase glycérol, on diminue dans la phase contenant les esters, l'acidité initiale ou formée lors de la première étape à une valeur au plus égale à 2 % et,

c) une troisième étape dans laquelle on soumet la phase résultant de la seconde étape à au moins une transestérification en présence d'au moins un alcool et d'un catalyseur basique, ladite transestérification conduisant à la formation d'une phase contenant principalement des esters que l'on récupère et d'une phase alcoolique, l'alcool étant un monoalcool aliphatique, linéaire ou ramifié de 1 à 5 atomes de carbone.

La première étape de transestérification acide est effectuée avec de l'alcool éthylique hydraté contenant de préférence de 4 à 50 % en poids d'eau. On a obtenu d'excellents résultats avec de l'alcool éthylique contenant de 7 à 30 % en poids d'eau.

La première étape de transestérification acide des huiles et/ou des graisses avec de l'alcool éthylique hydraté se fait en présence d'un catalyseur acide, ces huiles pouvant être brutes, dégommées (après précipitation de la lécithine), acides ou neutres.

Les catalyseurs acides mis en jeu peuvent être solubles, ou insolubles. On peut utiliser comme catalyseur acide soluble des acides sulfoniques ou tout autre acide fort y compris l'acide sulfurique ou chlorhydrique. Le problème de corrosion étant généralement aggravé avec les acides minéraux, on utilise de préférence un acide sulfonique. On peut toutefois aussi utiliser un mélange d'acides sulfurique et sulfonique qui permet d'économiser l'acide sulfonique. Comme exemples d'acides sulfoniques on peut citer l'acide toluène, xylène, benzène naphtalène-sulfonique, les acides dodecyl et didodecylbenzène sulfonique, les acides sulfoniques obtenus par sulfonation d'acides gras, d'esters ou même d'huiles, les acides phénolsulfoniques, le réactif de Twitchell, les acides sulfoniques de coupes pétrolières et dans certains cas des acides sulfoniques de polymères.

Les conditions opératoires vont être telles qu'elles permettent de réaliser une transestérification acide de triglycérides plutôt qu'une estérification des acides gras présents qui peuvent même augmenter si la teneur en eau de l'alcool est grande. Les quantités de catalyseurs acides par rapport à la quantité d'huile ou de graisse sont comprises entre 0,1 et 3 % en poids et de préférence de 0,3 à 1 % pour les catalyseurs solubles et de 1 à 20 % en poids et de préférence de 5 à 10 % pour les catalyseurs solides insolubles.

Les quantités d'alcool utilisées vont de 1 à 2,5 fois la quantité stoechiométrique (3 moles de monoalcool par mole de triglycéride) mais elles sont de préférence comprises entre 1,1 et 1,6 fois la quantité stoéchiométrique. L'alcool peut contenir des dénaturants divers de préférence non basiques. Les températures de la réaction sont en général de 70 à 150°C mais de préférence 80 à 130°C. La vitesse de réaction est très dépendante de la température. On peut obtenir une accélération d'un facteur de plus de 50 entre 70 et 130°C. Les temps de réaction se situent par exemple entre 30 minutes à haute température à 24 heures à basse température.

Dans ces conditions, la première étape de transestérification acide permet d'obtenir par exemple au moins 75 % de conversion en esters éthyliques par rapport à l'huile et de préférence 85 à 90 %.

Elle ne permet pas cependant même en poursuivant la réaction très longtemps d'obtenir une conversion totale parce que l'acide libre, en équilibre avec l'eau et l'ester est toujours présent et d'autre part parce qu'il y a un équilibre entre les triglycérides, les diglycérides, les monoglycérides et le glycérol et les esters éthyliques.

La réaction peut se faire en autoclave à 120 - 130°C, tous les composants étant réunis au départ, ou, dans un réacteur avec reflux où l'on injecte en continu l'alcool à chaud dans l'huile chauffée de manière à maintenir dans ce cas précis la température entre 85 et 125°C ou même simplement à reflux en injectant tout l'alcool au départ; la température est alors plus basse et les temps plus longs. Après refroidissement de préférence entre 40 et 60°C, on décante facilement et l'on récupère une phase ester brute et une de glycérol qui contient la plus grande partie de l'eau et généralement des catalyseurs s'ils sont hydrophiles.

Les huiles ou graisses que l'on peut utiliser comme bases pour fabriquer des esters sont très variées. Citons les huiles de coprah, babassu, palmiste, tucum, murumuru, palme, le saindoux, le suif, le beurre fondu, le karité, bassia, l'huile d'olive, d'arachide, de kapok, de datte amère, de papayer, de coloquinte, de croton, de souchet, d'épurge, de chanvre, d'hêtre, de ketmie, de pulghere, de cameline, de carthame, de niger, de tournesol, d'hévéa, de coco de purga, de noyer, de noix fièvre, de maïs, de soja, de coton, de sorgho, de pépin de raisin, de lin, de tabac, de pin commun, d'afzellie, de chou navet, de sénevé, de moutarde brune, de bois de chine, de bancoulier, d'aleurite d'amoora, de sapin, de cramble, de périlla, de sésame, de tall oil, de colza. On

0 194 165

utilise plus particulièrement des huiles saturées telles que coprah, palme ou fraction solide de palme ou encore des huiles dégommées riches en phosphatides, telles que soja ou colza.

La seconde étape permet de réduire l'acidité de la phase ester après la première étape, acidité qui peut parfois monter jusqu'à 14 % ou plus lorsqu'on utilise un alcool à 50 % d'eau et par exemple une huile de palme.

Dans cette étape on peut réduire l'acidité à une valeur égale au plus à 2 % d'acidité et de préférence à une valeur au plus égale à 1 % sinon les pertes en rendement peuvent se situer entre 15 et 50 % de l'huile au cours de la 3ème étape si l'on ne réduit pas l'acidité.

La réduction de l'acidité peut se faire avantageusement de plusieurs manières et notamment:
- par abaissement lent de la température réalisé de préférence pendant la première étape avant décantation,
- par estérification, en présence d'un désséchant de l'alcool qui est utilisé en quantité faible puisqu'il n'est chargé de sécher que 20 à 30 % de l'alcool total engagé qui a souvent une composition proche de l'azéotrope, dans l'ester,
- par estérification avec un alcool substantiellement sec (méthanol, propanol ou butanol par exemple) introduit après distillation des restes d'alcool-eau subsistant dans l'ester,
- par estérification en présence d'un mélange azétropique comprenant un tiers solvant pour éliminer l'eau, séparée dans l'hétéroazéotrope.

On pourrait éliminer les acides libres par neutralisation avec des bases faibles ou fortes. Mais une telle opération diminuerait fortement le rendement en esters et obligerait à traiter la phase glycérineuse ou alcaline.

On peut de manière préférée combiner l'abaissement de la température et l'estérification en présence d'un désséchant ou d'un tiers solvant ou d'un alcool sec pour diminuer l'acidité libre.

Pour réaliser l'estérification il n'est généralement pas utile d'ajouter un catalyseur acide. Toutefois, lorsqu'après la première étape, le catalyseur a été totalement éliminé lors de la décantation (cas de certains acides minéraux) il est nécessaire de rajouter un catalyseur soit sous forme soluble, soit sous forme insoluble (résines échangeuses d'ions acides par exemple).

La méthode la plus simple et la plus rapide pour estérifier consiste à chauffer l'ester brut en présence de son catalyseur acide, à évaporer l'alcool présent dans la phase ester, à faire passer l'alcool-eau par une colonne de tamis moléculaire 3 A après condensation des vapeurs et à recycler l'alcool, l'eau étant retenue par le tamis. Si l'on tient compte de l'eau de l'alcool qui généralement est présent dans l'ester à des teneurs proches d'un azéotrope même lorsqu'on est parti à la première étape d'un alcool contenant par exemple 30 % d'eau, on peut dire qu'avec l'eau de condensation provenant de l'estérification de l'acide libre, la quantité totale de tamis nécessaire est de l'ordre de 25 à 50 kg par tonne d'huile ou d'ester fabriqué. Le tamis est facilement régénérable et il n'est pas nécessaire de le sécher complètement avant emploi. Si l'on avait à fabriquer des esters avec au départ un alcool absolu, il faudrait environ 5 fois plus de tamis moléculaire sans que l'on soit assuré d'un rendement quantitatif avec les quantités d'alcool engagées.

Pour sécher l'alcool on peut avantageusement utiliser d'autres produits comme par exemple le carbonate de potassium, certains granulés végétaux formolisés ou même des résines échangeuses d'ions cationiques en combinaison ou non avec un tamis moléculaire.

La régénération de ces désséchants s'effectue de manière connue.

Une autre manière d'estérifier est d'évaporer l'alcool et l'eau de l'ester et d'ajouter un alcool sec de type méthanol. On obtient avec cet alcool une diminution d'acidité après estérification généralement suffisante pour entreprendre la catalyse basique de la 3ème étape qui est alors réalisée avec le méthanol.

Il reste que dans ce cas, le produit obtenu est un mélange d'esters méthyliques et en majorité éthyliques, et que l'appoint de méthanol nécessaire tout en étant faible rend plus complexe le procédé du point de vue approvisionnement. La même opération de diminution de l'acidité peut se faire avec le butanol que l'on peut ajouter à l'ester brut. L'intérêt d'ajout de butanol est que le butanol peut déplacer l'alcool éthylique de l'ester éthylique et entraîner l'eau d'estérification à des teneurs plus grandes que l'azéotrope. Il reste qu'il faut approvisionner en un produit différent consommé en partie.

Enfin, la diminution d'acidité par refroidissement à une valeur d'environ 3 à 4 % après la première étape n'est pas suffisante si l'on veut obtenir après transestérification basique 95 % au moins et de préférence 97 % au moins de rendement en poids par rapport à l'huile engagée.

La troisième étape de transestérification peut se faire avec un catalyseur basique de type soude ou potasse, lithine, alcoolate alcalin ou résine échangeuse anionique. L'intérêt de cette étape est double. D'une part, on achève la transestérification, ce qui permet d'atteindre 97 % de pureté dans l'ester final et de préférence 98 à 99,5 % par rapport aux composés issus de l'huile, d'autre part, on élimine toute trace d'acide et surtout les traces d'acide fort. En plus, on élimine avec la phase alcaline une partie des glycérides partiels. On atteint des conversions élevées de façon surprenante même avec un alcool hydraté que l'on ajoute pour dissoudre le catalyseur alcalin. Le même alcool hydraté en présence d'huile ne permet pas d'obtenir une bonne conversion.

La quantité d'alcool présente au cours de cette dernière transestérification est comprise entre 2 et 5 fois la quantité stoéchiométrique et de préférence 3 à 4 fois par rapport à l'huile ou la graisse non convertie en ester. Cet alcool est celui que l'on trouve dans l'ester issu de la seconde étape et auquel on ajoute généralement l'alcool nécessaire pour dissoudre le catalyseur basique.

La transestérification avec des catalyseurs basiques peut se faire en une ou plusieurs fois entre 20 et 100°C, de préférence entre 30 et 50°C. La température de réaction peut être différente de la température de décantation qui est parfois supérieure et comprise généralement entre 50 et 60°C. La quantité de base utilisée

4

correspond au moins à celle nécessaire à la neutralisation de l'acidité de l'ester à laquelle on ajoute un supplément nécessaire à la transestérification basique. Cette quantité totale de base est comprise entre 0,1 et 1 % et de préférence entre 0,2 et 0,6 % en poids par rapport à l'huile ou la graisse initiale. On peut aussi utiliser un catalyseur basique hétérogène recyclable comme un échangeur d'ions par exemple. Dans ce cas, il n'est pas utile d'ajouter de l'alcool pour dissoudre la base.

A la fin de la réaction de transestérification qui est très rapide, de 5 minutes à 1 heure en général, on peut ajouter avantageusement plusieurs fois de l'eau (de 1 à 3 % du poids) de manière à décanter le glycérol.

L'ester ainsi obtenu dans la phase supérieure contient des traces de sels alcalins, du glycérol, de l'alcool et de l'eau.

On peut avantageusement répéter l'étape de transestérification par ajout de traces de soude et d'alcool ou même simplement ajouter une solution aqueuse de soude, refaire une décantation et éliminer les traces de sels de sodium de l'acide fort et les monoglycérides, s'il en reste.

La purification finale est réalisée selon un procédé simple par passage sur résine échangeuse d'ions acides qui élimine les cations où bien par passage sur terre activée ou même par lavage à l'eau à laquelle on peut ajouter un acide minéral au premier lavage.

L'ester contient encore de l'alcool et de l'eau si l'on utilise un procédé de type échangeur d'ions sauf si l'on a utilisé pour la deuxième et troisième étape selon l'invention, du méthanol sec, car dans ce cas la décantation ne nécessite pas d'ajout d'eau. Cependant, la présence d'alcool jusqu'à 20 % en poids ne perturbe pas le fonctionnement d'un moteur bien que l'indice de cétane soit diminué.

Si l'on recourt à des lavages, il faut sécher l'ester final par évaporation de l'eau résiduelle sous vide en présence d'un hydrocarbure aromatique. On peut aussi ne pas sécher et ajouter quelques pour cent d'alcool.

Le procédé décrit selon l'invention, s'applique également aux esters d'acides gras obtenus à partir de mélanges comprenant l'alcool éthylique, l'eau, et un des alcools tels que l'alcool méthylique, propylique, butylique linéaire ou ramifié.

L'alcool éthylique dénaturé contient par exemple entre autres 2 % de méthanol et de l'isopropanol.

Les exemples qui suivent ne sont pas limitatifs mais illustrent l'invention.

**Exemple 1.**

Préparation d'esters éthyliques d'huile de coton à partir d'une huile de coton neutralisée et d'alcool hydraté.

a) On fait réagir dans un autoclave à 130°C pendant 2 heures 30 minutes 500 g d'huile de coton, 125,5 g d'alcool éthylique dénaturé comprenant 7 % d'eau et 4 g d'un acide sulfonique, la stoechiométrie en alcool par rapport à l'huile de coton étant de 1,5. Après refroidissement, on décante à 60°C et l'on soutire une phase glycérineuse. La phase ester supérieure comprend l'ester, de l'alcool, des traces d'eau et de l'acide libre qui correspond à 2,5 % d'acide oléique. L'ester a une pureté de 90,5 % par rapport aux composés huileux de la phase ester. La pureté est mesurée par indice de réfraction de l'ester lavé et séché par comparaison avec un ester pur et l'huile. La pureté correspond dans cette première phase à une conversion de 90,5 % de l'huile en ester car tous les composés huileux restent dans la phase supérieure.

b) Dans la deuxième étape, on estérifie l'acide libre contenu dans l'ester en chauffant à reflux l'alcool-eau de l'ester, alcool qui distille à la température de l'azéotrope. Après passage sur une petite colonne de tamis moléculaire 3A (25 g), l'alcool est recyclé dans la phase ester. Après 45 minutes, le dosage d'acidité au ph mètre, de l'ester donne 0,5 % d'acide compté en acide oléique. L'ester est à 91,9 % de pureté par rapport aux composés huileux.

c) Dans la troisième étape, on fait réagir l'ester par transestérification basique avec 2,5 g de soude dans 25 cm³ d'alcool éthylique à 7 % d'eau. Après 5 minutes à 35°C, on ajoute 10 cm³ d'eau et l'on décante à 60°C au bout d'une 1/2 heure. La phase ester est lavée une fois à l'eau acide et 3 fois à l'eau désionisée et séchée. L'ester a une pureté de 97,6 %. La mesure est non seulement réalisée au réfractomètre mais pour contrôle par distillation sous vide de l'ester et chromatographie en phase vapeur du résidu en présence d'un étalon. Le rendement en poids est de 99 %.

**Exemple 2**

Préparation d'esters éthyliques à partir d'huile de palme brute acide et d'alcool hydraté.

500 g d'huile de palme brute titrant au départ 5,2 % d'acide compté en acide palmitique, sont chauffés en présence de 132 g d'alcool éthylique dénaturé à 7 % d'eau et 5 g de catalyseur consistant en un acide sulfonique à haut poids moléculaire pendant 2 heures à 130°C. Après refroidissement, on sépare l'ester de la phase glycérol. La fraction ester est chauffée comme dans l'exemple 1 à 85°C, l'alcool est séché par passage de celui-ci sur un tamis moléculaire 3A. Pendant le séchage, l'acidité de l'ester passe de 3,1 % à 0,65 %. L'ester a une pureté de 89 % en ester après la première étape et de 92 % après la seconde.

La troisième étape, comme précédemment, consiste à transestérifier avec une base (soude). Après trois lavages à l'eau et séchage, on obtient 496 g d'ester brut qui a une pureté de 98,7 % en ester, la conversion en poids étant de 99 %. L'ester est soumis aux tests d'analyse classique pour les carburants diesels. Les résultats sont indiqués dans le tableau I.

**Tableau I**

**Caractéristiques de l'ester de palme de l'exemple 2.**

| | |
|---|---|
| masse volumique g/ml à 20°C | 0,8677 |
| point éclair | 180°C |
| viscosité à 20°C | 7,98 mm$^2$/s |
| viscosité à 50°C | 3,99 mm$^2$/s |
| point de trouble | 13°C |
| point d'écoulement | 9°C |
| température limite de filtrabilité | 1°C |
| carbone Conradson sur résidu 10 % distillation | 0,5 % |
| point initial | 308°C |
| 5 % | 319°C |
| 10 % | 324°C |
| 20 % | 326°C |
| 30 % | 327°C |
| 40 % | 328°C |
| 50 % | 330°C |
| 60 % | 330°C |
| 70 % | 330°C |
| 80 % | 334°C |
| 90 % | 334°C |
| distillat en volume          % | 97 |
| résidu          % | 1,2 |
| pertes          % | 1,8 |
| pouvoir calorifique supérieur | 39892 kJ/kg |
| indice de cétane | 54 |

**Exemple 3**

Préparation d'esters éthyliques à partir d'une huile de palme très acide (30 %) et d'alcool hydraté.

On mélange 375 g d'huile de palme brute 125 g d'acide palmitique. 132 g d'alcool éthylique dénaturé à 7 % d'eau, 4 g d'acide sulfonique à hauts poids moléculaire et l'on chauffe dans un autoclave à 130°C pendant 3 heures. Après refroidissement lent à 60°C de 2 heures, l'acidité libre n'est plus que de 5,7 % et la phase ester après soutirage de la phase glycérol contient encore 6,5 % d'un alcool à 9 % d'eau. La pureté de l'ester est de 81 %. On procède comme dans l'exemple 1 pour la deuxième étape où l'acidité tombe à 0,6 %.

Pour la troisième étape, on réalise cette fois-ci successivement deux transestérifications basiques à 35°C pendant 5 minutes avec ajout d'eau intermédiaire pour la décantation, les proportions de réactifs étant les mêmes que dans l'exemple 1.

Après la deuxième transestérification basique et décantation, on passe l'ester sur quelques grammes d'une résine échangeuse d'ions cationique (Amberlyst 15) préalablement lavée à l'alcool. La pureté de l'ester par rapport aux composés huileux de la phase ester est de 98,3 % et le rendement en poids de 101 % d'ester brut (non compris l'alcool et les traces d'eau). L'ester peut être utilisé directement avec l'alcool et l'eau présents, comme carburant diesel.

**Exemple 4**

Préparation d'esters éthyliques à partir d'huile de palme brute et d'un alcool hydraté - Comparaison avec l'exemple 2.

On traite de l'huile de palme comme dans l'exemple 2. Toutefois, pour la deuxième étape après évaporation de l'alcool-eau sous vide de la trompe à eau, on injecte de l'alcool éthylique absolu et une trace d'acide sulfonique pour tenter de diminuer l'acidité qui est de 3,2 %. Après 2 h, cette acidité n'a pratiquement pas bougé car l'eau de formation d'ester n'a pas été éliminée. La troisième étape est réalisée à une température plus élevée (à 90°C), car en dessous l'ester gélifie. Le rendement en poids d'ester dont la pureté est de 98,7 % n'est que de 87 % en poids par rapport à l'huile. L'acidité intermédiaire à la fin de la première étape, si elle n'est pas réduite, est la cause de la formation de savons qui entraînent dans la phase glycérol une grande partie des esters. De plus, dans ce cas, la transestérification avec les catalyseurs basiques doit être pratiquée à haute température soit 90°C, car même à 70°C il y a encore gélification qui empêche toute décantation.

**Exemple 5**

Préparation d'esters éthyliques à partir d'huiles de palme brute.

On traite l'huile de palme comme dans l'exemple 2. Toutefois, à la fin de la première étape après la décantation du glycérol, on évapore l'alcool et l'eau sous le vide d'une pompe à eau à 80°C. On injecte lors de la 2ème étape non pas de l'alcool éthylique sec comme dans l'exemple 4 mais du méthanol (17 g) et l'on chauffe 2 h à 67°C. L'acidité est cette fois-ci diminuée jusqu'à 0,97 %. On réalise la transestérification basique avec 2,1 g de soude et 12 g de méthanol à 60°C. Après addition de 10 cm³ d'eau, décantation et lavage de la phase ester, on obtient après séchage un ester qui est à 99 % de pureté. L'ester est un mélange d'esters éthylique à plus de 70 % et méthylique. Cet exemple montre qu'il est plus facile de réduire l'acidité avec le méthanol qu'avec l'éthanol. Le rendement en poids par rapport à l'huile est de 97 %. Il n'y a qu'un faible entraînement des esters dans la phase glycérol.

**Exemple 6** (Comparaison)

Fabrication d'esters éthyliques à partir d'huile de palme et d'alcool hydraté - Comparaison avec l'exemple 2.

On chauffe à reflux 1000 g d'huile de palme brute, 270 g d'alcool éthylique dénaturé à 7 % d'eau et 7,5 g d'acide sulfonique de haut poids moléculaire pendant 20 h à reflux. Après décantation, la conversion de l'huile est de 90,5 %.
On omet la deuxième étape et l'on procède directement à une transestérification basique avec de l'alcool éthylique sec et 6 g de soude à 35°C pendant 5 minutes. L'ester a une pureté de 94 % par rapport aux composés huileux, et le rendement en poids n'est que de 86 % pour l'ester brut lavé et séché. De plus, le produit cristallise lentement à une température de 24°C. Il est peu acceptable comme carburant diesel.

**Exemple 7**

Fabrication d'esters éthyliques de palme brute avec un alcool hydraté à 30 % d'eau.

On transestérifie 500 g d'huile de palme brute avec 140 g d'alcool éthylique contenant 30 % d'eau en présence de 4 g d'acide sulfonique de haut poids moléculaire. La stoechiométrie en alcool pur n'est ici que de 1,18 par rapport à l'huile. Après 2 h 30 à 130°C en autoclave, on refroidit et décante à 60°C. L'acidité tombe alors à 6 % rapidement puis à 0,88 % après le traitement réalisé comme dans l'exemple 2. La conversion de l'huile en ester est de 90,6 %. Une troisième étape donne après transestérification basique comme dans l'exemple 3, un ester qui a une pureté de 97,8 %. Le rendement en poids d'ester est de 99 % après passage sur résine cationique acide.
L'ester contient encore 5,3 % d'alcool qui a la composition d'un azéotrope eau-alcool. Il peut être utilisé tel que comme carburant diesel.

**Exemple 8**

Fabrication d'esters éthyliques à partir d'huile de palmiste.

On transestérifie 500 g d'huile de palmiste à 7 % d'acide avec un mélange d'acides sulfonique et sulfurique (0,5 % de chaque composant) en reflux de l'alcool éthylique à 7 % d'eau (rapport stoéchiometrique 1,45 en alcool pur).
Après 24 h de réaction à 84°C, (l'ester est à 89 % par rapport aux composés huileux de la phase ester) l'acidité de la phase ester est de 3,5 % en acide laurique. On injecte dans l'ester 50 cm³ d'alcool éthylique et 70 cm³ d'hexane. Avec un appareil de type Dean-Stark, on réalise une évaporation de l'alcool, de l'hexane et de l'eau avec recyclage de la phase hexane-alcool et soutirage de la phase eau-alcool.
Cette étape d'estérification et de séchage conduit après quelques heures à une acidité de 0,7 %.

La troisième étape est réalisée comme dans l'exemple 1. L'ester a une pureté finale de 98,5 %. Le rendement en poids est de 101 % après purification comme dans l'exemple 1.

**Exemple 9**

Fabrication d'esters éthyliques d'huile de colza avec l'alcool éthylique hydraté.

On traite 500 g d'huile de colza comme dans l'exemple 1.
On obtient 490 g d'un ester à 97 % de pureté, soit plus de 98 % de rendement en poids.

**Exemple 10**

Fabrication d'esters éthyliques de coprah avec l'alcool éthylique hydraté - Comparaison avec l'exemple 2.

On transestérifie de la même manière que dans l'exemple 1 une huile de coprah. On obtient, après la première étape, un ester contenant 2,8 % d'acide libre. La pureté de l'ester est de 89 % par rapport au composé huileux. On neutralise l'ester par une solution de potasse à 20 % dans l'eau et à 50°C, et l'on décante. Par alcoolyse alcaline à 35°C après 5 minutes et purification sur résine cationique de la phase ester, on récupère 89,6 g d'ester brut sur 100 g engagés.
Si l'on avait utilisé de l'ammoniaque pour neutraliser l'acide, on aurait eu un rendement de 81 % en poids par rapport à l'huile engagée.

**Exemple 11**

Fabrication d'esters éthyliques à partir d'huile de palme avec un alcool hydraté à 50 % d'eau.

On chauffe sous agitation et à reflux 500 g d'huile de palme, 5 g d'acide sulfonique et 50 g d'alcool éthylique contenant 50 % en poids d'alcool et 50 % d'eau. Dès que la température atteint 93°C, on injecte en continu 114 g de l'alcool qui contient 50 % d'eau et de manière à ce que la température reste sensiblement constante. Après 16 h de chauffage, on obtient un ester brut dont la pureté est de 76,7 %.
L'acidité est de 14,3 %. Pour la réduire, on injecte de l'alcool butylique (70 g) et l'on distille sans recyclage un mélange alcool-eau.
L'acidité après quelques heures est réduite jusqu'à la valeur de 0,8 %.
Le titre de l'ester est de 88,8 %. Deux catalyses basiques comme dans l'exemple 3 permettent d'obtenir 99 % d'un ester brut après purification selon l'exemple 3. Le mélange d'estérs butyliques et éthyliques a une pureté en ester de 97 %.

**Exemple 12**

Fabrication d'esters éthyliques à partir d'huile de palme et d'alcool hydraté avec un catalyseur minéral.

On chauffe à ébullition sous reflux 500 g d'huile de palme brute à 5,2 % d'acide libre, 169 g d'alcool éthylique rectifié à 6 % d'eau et 20 g d'acide chlorydrique à 37 % d'acide. La température au début est de 86°C au fond du ballon. La conversion après 11 heures est de 79,3 % en ester éthylique. Après décantation de 99,6 g de phase glycérol, on entame la seconde étape.
On ajoute à l'ester 10 g de résines échangeuses d'ions acides et l'on chauffe en distillant un mélange alcool-eau recyclé sur 30 g de tamis 3A. L'acidité descend jusqu'à 0,9 %. A ce moment, on ajoute après filtration de la résine, à l'ester, et à 30°C, 20 g d'une solution à 10 % de soude dans de l'alcool rectifié, et l'on chauffe à 50°C rapidement en ajoutant 10 cm$^3$ d'eau. Après décantation de 70 g d'une phase de glycérol, on recommence l'opération de transestérification mais avec 10 fois moins de soude. On obtient un ester dont la pureté par rapport aux composés huileux de l'ester est de 98,9 %. Le rendement en poids est de 97 % après purification selon l'exemple 3. L'indice de Conradson de l'ester sur 10 % du résidu est de 0,3 %.

# 0 194 165

## Revendications

1. Procédé de fabrication d'une composition d'esters d'acides gras, utilisable comme carburant de substitution du gazole, et comprenant une proportion majeure d'esters éthyliques par transestérification d'une huile et/ou d'une graisse d'origine végétale ou animale, pouvant contenir des acides libres, ledit procédé étant caractérisé en ce qu'il comprend:

a) une première étape dans laquelle on effectue au moins une transestérification de ladite huile ou graisse en présence d'au moins un monoalcool aliphatique consistant au moins en majeure partie en alcool éthylique, ledit alcool éthylique contenant de 1 % à 60 % en poids d'eau, et d'un catalyseur acide, ladite transestérification conduisant à la formation d'une phase riche en esters et d'une phase riche en glycérol, ladite première étape étant réalisée dans des conditions telles qu'elle conduit à une conversion substantielle de ladite huile ou de ladite graisse.

b) une seconde étape dans laquelle, après élimination de la phase glycérol, on diminue dans la phase contenant les esters, l'acidité libre initiale ou formée lors de la première étape à une valeur au plus égale à 2 %.

c) une troisième étape dans laquelle on soumet la phase résultant de la seconde étape à au moins une transestérification en présence d'au moins un monoalcool aliphatique, linéaire ou ramifié, de 1 à 5 atomes de carbone, et d'un catalyseur basique, ladite transestérification conduisant à la formation d'une phase contenant principalement des esters que l'on récupère et d'une phase alcoolique.

2. Procédé selon la revendication 1, caractérisé en ce qu'on effectue la première étape de transestérification avec de l'alcool éthylique hydraté contenant de 4 à 50 % en poids d'eau.

3. Procédé selon l'une des revendications 1 à 2, caractérisé en ce qu'on effectue la première étape de transestérification de façon à convertir au moins 75 % de ladite huile ou de ladite graisse.

4. Procédé selon l'une des revendications 1 à 3, caractérisé en ce que la première étape de transestérification acide s'effectue à une température de 70 à 150°C pendant une durée comprise entre 30 minutes et 24 heures.

5. Procédé selon l'une des revendications 1 à 4, caractérisé en ce que la première étape de transestérification acide s'effectue en présence d'une quantité d'alcool comprise entre 1 et 2,5 fois la quantité stoechiométrique.

6. Procédé selon l'une des revendications 1 à 5, caractérisé en ce que, dans la première étape de transestérification, on utilise un catalyseur acide soluble, en une proportion de 0,1 à 3 % en poids, ou un catalyseur acide insoluble en une proportion de 1 à 20 % en poids par rapport à l'huile ou à la graisse.

7. Procédé selon l'une des revendications 1 à 6, caractérisé en ce que l'huile ou la graisse présente un taux d'acidité allant jusqu'à environ 50 %.

8. Procédé selon l'une des renvendications 1 à 7, caractérisé en ce que dans la première étape on introduit l'alcool hydraté en continu dans un réacteur avec reflux de manière à maintenir la température de réaction entre 85 et 125°C.

9. Procédé selon l'une des revendications 1 à 8, caractérisé en ce que dans la deuxième étape on diminue l'acidité libre initiale ou formée lors de la première étape à une valeur au plus égale à 1 %.

10. Procédé selon l'une des revendications 1 à 9, caractérisé en ce que dans la deuxième étape, l'on diminue l'acidité par une estérification avec un alcool en présence d'un désséchant de l'alcool.

11. Procédé selon l'une des revendications 1 à 9, caractérisé en ce que dans la deuxième étape, l'on diminue l'acidité par estérification avec l'alcool méthylique ou propylique ou butylique substantiellement anhydre.

12. Procédé selon l'une des revendications 1 à 9, caractérisé en ce que dans la deuxième étape l'on diminue l'acidité par une estérification en présence d'un mélange azéotropique contenant un tiers solvant.

13. Procédé selon l'une des revendications 1 à 12, caractérisé en ce qu'on effectue la troisième étape entre 20°C et 100°C, en présence d'une quantité d'alcool comprise entre 2 et 5 fois la quantité stoéchiométrique de l'huile ou la graisse non convertie, en présence d'un catalyseur basique dont la proportion est comprise entre 0,1 et 1 % en poids par rapport à l'huile ou la graisse et pendant une durée de 5 minutes à 1 heure.

14. Procédé selon l'une des revendications 1 à 13 caractérisé en ce que les esters récupérés dans la troisième étape sont soumis à une purification finale par lavages successifs à l'eau puis séchage, par lavages sucessifs à l'eau puis ajout d'alcool, par passage sur résines échangeuses d'ions cationiques ou par passage sur terre activée.

15. Procédé selon l'une des revendications 1 à 14 caractérisé en ce que sa mise en oeuvre est poursuivie jusqu'à l'obtention d'un rendement en poids d'esters bruts par rapport à l'huile d'au moins 95 %.

16. Composition utilisable comme carburant de substitution de gazole caractérisée en ce qu'elle renferme au moins un ester préparé par un procédé selon l'une des revendications 1 à 15.

17. Composition selon la revendication 16, caractérisée en ce qu'elle renferme 5 à 95 % en poids dudit ester et 95 à 5 % en poids de gazole.

## Patentansprüche

1. Verfahren zur Herstellung einer Zubereitung aus Fettsäureestern, die als Dieselkraftstoffersatz verwendbar ist und einen überwiegenden Teil an durch Umesterung eines Öls und/oder eines Fetts pflanzlicher oder tierischer Herkunft, welche freie Säuren enthalten können, erhaltenen Ethylestern enthält, dadurch gekennzeichnet,

a) daß man in einer ersten Stufe wenigstens eine Umesterung des Öls oder Fetts in Gegenwart wenigstens eines einwertigen aliphatischen Alkohols, der zum überwiegenderen Teil Ethylalkohol enthält, wobei dieser 1 bis 60 Gew.-% Wasser aufweist, und eines sauren Katalysators durchführt und die Umesterung zur Bildung einer an Estern und einer an Glycerol reichen Phase führt, wobei diese erste Stufe unter zu einer wesentlichen Umsetzung des Öls oder des Fetts führenden Bedingungen ausgeführt wird,

b) daß man in einer zweiten Stufe nach Entfernung der Glycerolphase in der die Ester enthaltenden Phase die anfängliche freie Acidität oder die während der ersten Stufe gebildete auf einen Wert von höchstens gleich 2 % vermindert,

c) daß man in einer dritten Stufe die aus der zweiten Stufe erhaltene Phase wenigstens einer Umesterung in Gegenwart wenigstens eines einwertigen aliphatischen, linearen oder verzweigten Alkohols mit 1 bis 5 Kohlenstoffatomen und eines basischen Katalysators, unterzieht, wobei diese Umesterung zur Bildung einer hauptsächlich gewinnbare Ester enthaltenden Phase und einer alkoholischen Phase führt.

2. Verfahren nach Anspruch 1, dadurch gekennzeichnet, daß man die erste Stufe der Umesterung mit wäßrigem, 4 bis 50 Gew.-% Wasser enthaltenden Ethylalkohol durchführt.

3. Verfahren nach einem der Ansprüche 1 bis 2, dadurch gekennzeichnet, daß man die erste Stufe der Umesterung derart durchführt, daß wenigstens 75 % des Öls oder des Fetts umgewandelt werden.

4. Verfahren nach einem der Ansprüche 1 bis 3, dadurch gekennzeichnet, daß man die erste Stufe der sauren Umesterung bei einer Temperatur von 70 bis 150°C während einer Zeitdauer zwischen 30 Minuten und 24 Stunden durchführt.

5. Verfahren nach einem der Ansprüche 1 bis 4, dadurch gekennzeichnet, daß man die erste Stufe der sauren Umesterung in Gegenwart der 1- bis 2,5-fachen stöchiometrischen Menge Alkohol durchführt.

6. Verfahren nach einem der Ansprüche 1 bis 5, dadurch gekennzeichnet, daß man in der ersten Stufe der Umesterung einen sauren löslichen Katalysator in einem Anteil von 0,1 bis 3 Gew.-% oder einen sauren unlöslichen Katalysator in einem Anteil von 1 bis 20 Gew.-%, bezogen auf das Öl oder das Fett, verwendet.

7. Verfahren nach einem der Ansprüche 1 bis 6, dadurch gekennzeichnet, daß das Öl oder das Fett einen Säuregehalt bis etwa 50 % aufweist.

8. Verfahren nach einem der Ansprüche 1 bis 7, dadurch gekennzeichnet, daß man in der ersten Stufe kontinuierlich wäßrigen Alkohol in einen Reaktor mit Rückfluß derart einleitet, daß die Reaktionstemperatur zwischen 85 und 125°C gehalten wird.

9. Verfahren nach einem der Ansprüche 1 bis 8, dadurch gekennzeichnet, daß man in der zweiten Stufe die anfängliche freie Acidität oder die während der ersten Stufe gebildete auf einen Wert von höchstens gleich 1 % bringt.

10. Verfahren nach einem der Ansprüche 1 bis 9, dadurch gekennzeichnet, daß man in der zweiten Stufe die Acidität durch eine Veresterung mit einem Alkohol in Gegenwart eines Alkoholtrocknungsmittels verringert.

11. Verfahren nach einem der Ansprüche 1 bis 9, dadurch gekennzeichnet, daß man in der zweiten Stufe die Acidität durch Veresterung mit im wesentlichen wasserfreiem Methyl- oder Propyl- oder Butylalkohol verringert.

12. Verfahren nach einem der Ansprüche 1 bis 9, dadurch gekennzeichnet, daß man in der zweiten Stufe die Acidität durch Veresterung in Gegenwart einer ein Drittel Lösungsmittel enthaltenden azeotropen Mischung verringert.

13. Verfahren nach einem der Ansprüche 1 bis 12, dadurch gekennzeichnet, daß die dritte Stufe zwischen 20 und 100°C während einer Zeitdauer von 5 Minuten bis zu einer Stunde in Gegenwart einer Menge Alkohol, die zwischen der zwei- bis fünffachen stöchiometrischen Menge des nicht umgesetzten Öls oder Fetts liegt und in Gegenwart eines basischen Katalysators, dessen Anteil zwischen 0,1 und 1 Gew.-%, bezogen auf das Öl oder das Fett, beträgt, durchgeführt wird.

14. Verfahren nach einem der Ansprüche 1 bis 13, dadurch gekennzeichnet, daß die in der dritten Stufe gewonnenen Ester einer Endreinigung durch mehrfaches Waschen in Wasser und Trocknen, mehrfaches Waschen in Wasser und anschließendem Hinzufügen von Alkohol, Leiten durch ein Kationenaustauscherharz oder Leiten durch aktivierte Bleicherde unterworfen werden.

15. Verfahren nach einem der Ansprüche 1 bis 14, dadurch gekennzeichnet, daß das Verfahren solange durchgeführt wird, bis eine gewichtsmäßige Ausbeute an Rohestern, bezogen auf das Öl, von wenigstens 95 % erreicht wird.

16. Als Dieselkraftstoffersatz verwendbare Zubereitung, dadurch gekennzeichnet, daß sie wenigstens einen nach dem Verfahren der Ansprüche 1 bis 15 hergestellten Ester enthält.

17. Verfahren nach Anspruch 16, dadurch gekennzeichnet, daß die Zubereitung 5 bis 95 Gew.-% des Esters und 95 bis 5 Gew.-% Dieselkraftstoff enthält.

**Claims**

1. A process for manufacturing of composition of fatty acid esters, useful as motor fuel substitute for gas oil and comprising a major proportion of ethyl esters, by transesterification of an oil and/or grease of vegetable or animal origin, optionally containing free acids, said process being characterized by the following steps:

a) a first step wherein said oil or grease is subjected to at least one transesterification in the presence of at least one aliphatic monoalcohol consisting at least in major part of ethyl alcohol, said ethyl alcohol containing from 1 to 60 % by weight of water and of an acid catalyst, said transesterification resulting in the formation of a phase of high esters content and a phase of high glycerol content, said first step being conducted under such conditions that it provides for a substantial conversion of said oil or said grease,

b) a second step wherein, after removal of the glycerol phase, the initial free acidity, or the acidity formed during the first step, of the esters-containing phase, is decreased to a value at most equal to 2 %.

c) a third step wherein the phase resulting from the second step is subjected to at least one transesterification in the presence of at least one aliphatic, linear or branched monoalcohol of 1 to 5 carbon atoms and of a basic catalyst, said transesterification resulting in the formation of a phase mainly containing esters, which are recovered, and an alcohol phase.

2. A process according to claim 1, characterized in that the first transesterification step is performed with hydrated ethyl alcohol containing 4 to 50 % by weight of water.

3. A process according to any of claims 1 to 2, characterized in that the first transesterification step is so performed as to convert at least 75 % of said oil or of said grease.

4. A process according to any of claims 1 to 3, characterized in that said first acid transesterification step is conducted at a temperature from 70 to 150°C for a time ranging from 30 minutes to 24 hours.

5. A process according to any of claims 1 to 4, characterized in that the first acid transesterification step is performed in the presence of an alcohol amount ranging from 1 to 2.5 times the stoichiometrical amount.

6. A process according to any of claims 1 to 5, characterized in that the first transesterification step is performed in the presence of a soluble acid catalyst used in a proportion of 0.1 to 3 % by weight or of an insoluble acid catalyst used in a proportion of 1 to 20 % by weight with respect to the oil or to the grease.

7. A process according to any of claims 1 to 6, characterized in that the oil or the grease has an acidity content of at most about 50 %.

8. A process according to any of claims 1 to 7, characterized in that, in the first step, hydrated alcohol is continuously introduced in reactor with reflux so as to maintain the reaction temperature between 85 and 125°C.

9. A process according to any of claims 1 to 8, characterized in that, in the second step, the free acidity, initial or formed during the first step, is decreased to a value of at most 1 %.

10. A process according to any of claims 1 to 9, characterized in that, in the second step, the acidity is decreased by esterification with an alcohol in the presence of an alcohol drying agent.

11. A process according to any of claims 1 to 9, characterized in that, in the second step, the acidity is decreased by esterificatlion with substantially anhydrous methyl, propyl or butyl alcohol.

12. A process according to any of claims 1 to 9, characterized in that, in the second step, the acidity is decreased by esterification in the presence of an azeotropic mixture containing a third solvent.

13. A process according to any of claims 1 to 12, characterized in that the third step is conducted at a temperature from 20°C to 100°C, in the presence of an alcohol amount ranging from 2 to 5 times the totals stoichiometrical amount of unconverted oil or grease, in the presence of a basic catalyst used in a proportion from 0.1 to 1 % by weight with respect to the oil or to the grease and for a time ranging from 5 minutes to 1 hour.

14. A process according to any of claims 1 to 13, characterized in that the esters recovered in the third step are subjected to a final purification by successive washings with water followed with a drying step, by successive washings with water followed with alcohol addition, by passage over cationic ion exchange resins or by passage over activated clay.

15. A process according to any of claims 1 to 14, characterized in that its operation is continued up to the obtainment of a yield of at least 95 % by weight of raw esters with respect to the oil.

16. A composition useful as gas oil substitute fuel characterized in that it contains at least one ester prepared by the process according to any of claims 1 to 15.

17. A composition according to claim 16, characterized in that it contains 5 to 95 % by weight of said ester and 95 to 5 % by weight of gas oil.